# EUROPEAN PATENT APPLICATION

(11) **EP 4 215 506 A1**
(43) Date of publication of application: **26.07.2023**
(21) Application number: 22315014.5
(22) Date of filing: 19.01.2022
(51) Int. Cl.: C04B 28/14, C04B 28/16, B33Y 70/00, B33Y 80/00, E04B 2/56, E04C 1/41, E04C 2/288, C04B 38/10

(54) **A METHOD FOR MANUFACTURING A CONSTRUCTION ELEMENT**

(71) Applicant: Saint-Gobain Weber France, 94370 Sucy en Brie (FR)
(72) Inventor: Dunaeva, Elena, 75015 PARIS (FR); Beaumont, Julien, 75017 PARIS (FR); Dudda, Udo, 40549 (DE)
(74) Representative: Saint-Gobain Recherche

(57) **Abstract**

The invention relates to a method for manufacturing a construction element comprising:
- providing a base element that comprises at least one cavity,
- forming a mineral slurry by mixing a composition comprising a hydraulic binder with water, said hydraulic binder comprising 20-70wt% of calcium sulfoaluminate cement, 25-70wt% of Ordinary Portland Cement and 5-20wt% of a source of calcium sulfate,
- forming a slurry of mineral foam by mixing said mineral slurry with an aqueous foam,
- filling at least part of said at least one cavity with said slurry of mineral foam, and
- leaving said slurry of mineral foam to set and harden to form a mineral foam.

## Description

The present invention relates to a method for manufacturing a construction element, especially a construction element comprising a base element that comprises at least on cavity, said cavity being at least partially filled with a mineral foam.

Such construction elements are for example walls or parts of walls, and may be manufactured by 3-D printing methods.

It is known to fill cavities in construction elements, such as walls or parts of walls, with insulating materials, in order to improve their thermal insulation properties. Insulating materials are for example mineral wool or foams, either inorganic (e.g. cement foams) or organic (e.g. polyurethane foams).

However, these different solutions are not without their drawbacks. The filling of the cavities by the insulating material is not always homogeneous, leading to the creation of thermal bridges and thus to a degradation of the thermal insulation performances. In case of mineral foams, a challenge is to reduce the shrinkage that occurs during the hardening process. A very low shrinkage is of paramount importance for construction elements having a great height.

FR3085374 proposed, in order to reduce the shrinkage of mineral foams, to use a hydraulic binder comprising binary or ternary mixtures of 20-60wt% gypsum with Calcium Aluminate Cement (CAC), Ordinary Portland Cement (OPC) and/or Calcium Sulfoaluminate Cement (CSA). For example, a ternary binder comprising 42wt% CSA, 35wt% gypsum and 23wt% OPC is described.

The invention aims at providing a method that makes it possible to propose even more stable mineral foams.

To this end, an object of the invention is a method for manufacturing a construction element comprising:
- providing a base element that comprises at least one cavity,
- forming a mineral slurry by mixing a composition comprising a hydraulic binder with water, said hydraulic binder comprising 20-70wt% of calcium sulfoaluminate cement, 25-70wt% of Ordinary Portland Cement and 5-20wt% of a source of calcium sulfate,
- forming a slurry of mineral foam by mixing said mineral slurry with an aqueous foam,
- filling at least part of said at least one cavity with said slurry of mineral foam, and
- leaving said slurry of mineral foam to set and harden to form a mineral foam.

The invention also relates to a method for manufacturing a construction element comprising:
- providing a base element that comprises at least one cavity,
- forming a mineral slurry by mixing a composition comprising a hydraulic binder with water,
- forming a slurry of mineral foam by mixing said mineral slurry with an aqueous foam, and
- filling at least part of said at least one cavity with said slurry of mineral foam, and
- leaving said slurry of mineral foam to set and harden to form a mineral foam, wherein the shrinkage of the mineral foam after 28 days of hardening is at most 0.350 mm/m, preferably at most 0.300 mm/m, and most preferably at most 0.250 mm/m.

The shrinkage is measured according to the standard EN 13872:2004, using specimens of 40*40*160 mm³.

Another object of the invention is a construction element obtainable by this method.

The base element preferably comprises two walls facing one another. The two walls thus create a cavity or a plurality of cavities.

The base element is for example a wall for a building or for a house, such as a load-bearing wall or a dividing wall.

Said base element is preferably made of concrete or mortar.

Said two wall facing one another may be constructed by any known method, for example by pouring concrete between formworks or by joining masonry elements such as bricks or concrete blocks.

Preferably, the method comprises manufacturing said walls by 3D-printing of mortar.

3-D printing of mortar (or concrete), also known as additive manufacturing, is a method in which a computer-controlled, such as a robot, manufactures three-dimensional objects by depositing a mortar layer by layer. Also called Contour Crafting or Cementitious Ink Printing, these techniques may be realized in construction scale applications, and their advantages are the integration of the design, planning and construction processes coupled with an increase automation and rationalization of building processes. Savings on labor costs, lower losses and consumption of materials, eliminating formwork, shorter project lengths and capital commitment as well as an increased workspace safety are other driving factors for this technology.

In this technique, a wet mortar is continuously produced by mixing a dry mortar composition with water, is pumped and conveyed towards the printer head of a computer-controlled printer, usually a robot or a gantry, and is then deposited as a layer on a previous layer of mortar, usually by being extruded through a nozzle. The printer head is moved according to a predetermined scheme, precisely materializing e.g. complex geometries designed by architects, so as to manufacture the final object.

The height of said walls is preferably at least 1 m, especially at least 2 m. The height of the walls is usually below 5 m, even below 4 m. The invention is especially useful for elements having a great height, since the shrinkage of the foam is an issue mainly for this kind of elements.

The base element will frequently be parallelepipedic, but other forms are possible, especially when using 3D-printing techniques.

The hydraulic binder comprises (or preferably consists of) 20-70wt% of calcium sulfoaluminate cement (CSA), 25-70wt% of Ordinary Portland Cement (OPC) and 5-20wt% of a source of calcium sulfate.

The inventors have found that this specific ternary composition made it possible to reduce the shrinkage of the mineral foam during hardening.

The amount of calcium sulfoaluminate cement is preferably 22-60wt%, especially 25-40wt%. The amount of Ordinary Portland Cement is preferably 30-70wt%, especially 35-65wt%, even 45-65wt% or 50-65wt%. The amount of a source of calcium sulfate is preferably 5-15wt%, especially 7-12wt%. Proportions are given with respect to the weight of hydraulic binder.

Ordinary Portland Cement is preferably a CEM I cement according to Standard EN 197-1. The source of calcium sulfate is preferably selected from gypsum, anhydrite, hemihydrate and mixtures thereof.

The composition comprising a hydraulic binder is preferably a pulverulent mixture.

In the step of forming a mineral slurry, the water ratio, i.e. the weight ratio of added water to hydraulic binder is preferably 0.30 to 0.60, especially 0.35 to 0.50.

The composition comprising a hydraulic binder may additionally contain additives and/or aggregates.

According to a first embodiment, the composition comprising a hydraulic binder consists of said hydraulic binder and optionally of additives. The mineral slurry is in that case a "cement slurry".

According to a second embodiment, the composition comprising a hydraulic binder consists of said hydraulic binder, aggregates and optionally additives. The mineral slurry is in that case a "mortar slurry" (or wet mortar).

Aggregates are for example fillers (such as limestone or dolomitic fillers) and/or sands (such as silica sand). Aggregates may also include lightweight aggregates, especially selected from perlite, vermiculite, expanded glass beads, expanded polystyrene beads, cenospheres, expanded silicates, aerogels and mixtures thereof.

Aggregates may also include fibers, especially polymeric fibers, for example made of polypropylene or polyvinyl alcohol, especially in an amount of 0.1 to 5wt% with respect to the weight of hydraulic binder. Fibers make it possible to improve the mechanical properties of the foam and reduce the shrinkage thereof.

When aggregates are present, the' weight ratio aggregates/hydraulic binder is preferably 10:90 to 70:30.

In both embodiments, additives are preferably selected from polymers, plasticizers, superplasticizers, accelerators, retarders, rheological modifiers (such as cellulose ethers) and mixtures thereof. The additives should preferably not contain anti-foaming agents. When present, the total amount of additives is preferably 0.5-15wt% with respect to the weight of hydraulic binder.

Accelerators and retarders are additives that accelerate or retard setting and/or hardening of the hydraulic binder. Accelerators include for example lithium carbonate. Retarders are for example based on tartaric acid or citric acid, or on sodium salts of such acids.

The use of (super)plasticizer makes it possible to limit the shrinkage by reducing the water content. Examples of superplasticizers include polycarboxylate poly(ethylene glycol) esters.

Polymers are preferably in the form of redispersible polymer powders (RDP). The amount of polymers is preferably 0.5-10wt%, especially 1-5wt% with respect to the weight of hydraulic binder. The presence of polymers makes it possible to obtain a foam that is less brittle.

The polymer preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins, dienes and vinyl halides.

The vinyl esters are preferably vinyl acetate, vinyl propionate, vinyl butyrate, vinyl 2-ethylhexanoate, vinyl laurate, 1-methylvinyl acetate, vinyl pivalate and vinyl esters of alpha-branched monocarboxylic acids having from 5 to 11 carbon atoms. Preferred methacrylates or acrylates are methyl acrylate, methyl methacrylate, ethyl acrylate, ethyl methacrylate, propyl acrylate, propyl methacrylate, n-butyl acrylate, n-butyl methacrylate and 2-ethylhexyl acrylate. Vinyl aromatics are preferably styrene, methylstyrene and vinyltoluene. The preferred vinyl halide is vinyl chloride. The preferred olefins are ethylene and propylene, and the preferred dienes are 1,3-butadiene and isoprene.

Particularly preferred polymers are copolymers of at least two of the abovementioned monomers, especially vinyl acetate-ethylene copolymers, vinyl ester-ethylene-vinyl chloride copolymers ,vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrene-butadiene copolymers, styrene-acrylate copolymers, vinyl acetate-(meth)acrylic acid-ethylene terpolymers.

It is to be noted that at least some additives and/or aggregates (especially fibers) may not be present in the composition comprising a hydraulic binder, but may be added at a later stage, for example in the mineral slurry or in the slurry of mineral foam. In that case, the mineral slurry and/or the slurry of mineral foam comprises such additives and/or aggregates. The details given above in terms of chemical nature and quantities are also applicable.

Preferably, a liquid-phase accelerator is added to the slurry of mineral foam before filling the cavity, preferably just before filling the cavity. It may alternatively (but less preferably) be added to the mineral slurry. Such a liquid-phase accelerator also contributes to reduce the shrinkage of the mineral foam. The liquid-phase accelerator preferably contains calcium salts and/or alkali salts, such as lithium carbonate, sodium carbonate, sodium sulfate and/or calcium nitrate. As an example, solutions containing calcium nitrate and sodium thiocyanate, such as the accelerator sold under the name SikaRapid^{®} C-100, can be used. The weight ratio between the liquid-phase accelerator and the hydraulic binder is preferably 0.01-0.20, especially 0.03-0.10.

The density of the mineral foam after hardening (especially after 28 days of hardening) is preferably 60-250 kg/m³, especially80-200 kg/m³. Such low densities make it possible to achieve low thermal conductivities, and therefore to improve the thermal resistance of the construction element and the thermal insulation of the building.

The density of the mineral foam is regulated mainly by playing on the ratio between the mineral slurry and the aqueous foam. The ratio R between the volume (or volumetric flow rate) of aqueous foam and the volume (or volumetric flow rate) of mineral slurry is preferably 7 to 20, especially 10 to 18.

The aqueous foam is preferably obtained by mixing water and a foaming agent or a foam stabilizing agent, then by introducing a gas, especially air, by stirring, bubbling or by injection under pressure. The average diameter of the bubbles in the aqueous foam is preferably 400 µm or lower, especially 200 µm or lower. The density of the aqueous foam is preferably 50-100 g/L.

The foaming agent is preferably a surfactant. According to a preferred example, it is a surfactant derived from proteins or amino acids.

According to another example, the aqueous foam comprises the mixture of a cationic surfactant which is a salt (in particular a halide) of quaternary ammonium and of an anionic surfactant which is a salt (in particular an alkaline salt) of a carboxylic acid in C10-C24, for instance potassium stearate.

According to yet another example, the aqueous foam comprises nanoparticles, in particular made of silica, which have the property of stabilizing the foams. Such foams are called "Pickering foams". Silica nanoparticles may themselves be stabilized by surfactants.

The concentration of foaming agent (especially of surfactant) in the aqueous foam is preferably 0.5 to 10wt%, especially 1.5 to 6wt%. A higher concentration improves the stability of the foam, but may increase the setting time of the hydraulic binder.

Mixing the mineral slurry with aqueous foam is preferably carried out with a static mixer.

The construction element can be manufactured directly at the building construction site. Preferably, however, the construction element is a prefabricated element, intended to be transported to the building construction site.

### Examples

The invention will be better understood with the help of the following non-limiting examples.

Mineral slurries were made by mixing water with compositions comprising a hydraulic binder, according to a weight ratio water/hydraulic binder named "w/c".

In addition to the hydraulic binder, the composition also comprised accelerators (0.15wt% Li₂CO₃, 0.2wt% Na₂CO₃ and 0.2wt% Na₂SO₄) and retarders (0.04wt% of tartaric acid and 0.2wt% of sodium citrate).

Comparative examples C1-C4 used the following hydraulic binders:
C1: 100wt% OPC; w/c = 0.45
C2: 90wt% OPC + 10wt% CSA; w/c =0.45
C3: 55wt% CSA + 45wt% gypsum; w/c = 0.37
C4: 23wt% OPC + 42wt% CSA + 35wt% gypsum; w/c = 0.37

Examples according to the invention 1-3 used the following hydraulic binders:
1: 40wt% OPC + 50wt% CSA + 10wt% gypsum; w/c = 0.37
2: 60wt% OPC + 30wt% CSA + 10wt% gypsum; w/c = 0.37
3: 60wt% OPC + 30wt% CSA + 10wt% gypsum; w/c = 0.35

In all the examples, OPC was a CEM I 52.5 R Portland Cement. CSA was a calcium sulfoaluminate cement (i.tech^{®} ALI PRE from Heidelberg Cement) and gypsum was anhydrite or hemihydrate.

The mineral slurries were then mixed with an aqueous foam made in a foam generator by using a 3wt% solution of a protein-based surfactant sold under the name "Propump 26". The density of the aqueous foam was 70 g/L. The "R" ratio as defined above was 14.

The densities of the mineral foams (after hardening) were around 150-180 kg/m³ for all the examples.

Table 1 below shows the results in terms of shrinkage, after 7, 14 and 28 days, measured according to the standard EN 13872:2004, using specimens of 40*40*160 mm³.

**[Table 1]**

| | Shrinkage (mm/m) | | |
|---|---|---|---|
| | 7d | 14d | 28d |
| C1 | -1.2 | -1.6 | ND |
| C2 | -1.2 | -1.6 | ND |
| C3 | -0.40 | -0.65 | -1.05 |
| C4 | -0.40 | -0.55 | -0.78 |
| 1 | -0.18 | -0.25 | -0.35 |
| 2 | -0.10 | -0.20 | -0.28 |
| 3 | -0.08 | -0.15 | -0.18 |

The results show that the hydraulic binder used in the invention makes it possible to reduce the shrinkage of the foam.

## Claims

1. A method for manufacturing a construction element comprising:
- providing a base element that comprises at least one cavity,
- forming a mineral slurry by mixing a composition comprising a hydraulic binder with water, said hydraulic binder comprising 20-70wt% of calcium sulfoaluminate cement, 25-70wt% of Ordinary Portland Cement and 5-20wt% of a source of calcium sulfate,
- forming a slurry of mineral foam by mixing said mineral slurry with an aqueous foam,
- filling at least part of said at least one cavity with said slurry of mineral foam, and
- leaving said slurry of mineral foam to set and harden to form a mineral foam.

2. A method for manufacturing a construction element, especially according to Claim 1, comprising:
- providing a base element that comprises at least one cavity,
- forming a mineral slurry by mixing a composition comprising a hydraulic binder with water,
- forming a slurry of mineral foam by mixing said mineral slurry with an aqueous foam, and
- filling at least part of said at least one cavity with said slurry of mineral foam, and
- leaving said slurry of mineral foam to set and harden to form a mineral foam, wherein the shrinkage of the mineral foam after 28 days of hardening is at most 0.350 mm/m, as measured according to the standard EN 13872:2004.

3. The method according to any one of the preceding Claims, wherein the base element comprises two walls facing one another, said method comprising manufacturing said walls by 3D-printing of mortar.

4. The method according to the preceding Claim, wherein the height of said walls is at least 1 m, especially at least 2 m.

5. The method according to any one of the preceding Claims, wherein the density of the mineral foam after hardening is 60-250 kg/m³, especially 80-200 kg/m³.

6. The method according to any one of the preceding Claims, wherein the aqueous foam is obtained by mixing water and a foaming agent or a foam stabilizing agent, then by introducing a gas, especially air, by stirring, bubbling or by injection under pressure.

7. The method according to the preceding Claim, wherein the foaming agent is a surfactant, especially a surfactant derived from proteins or amino acids.

8. The method according to any one of the preceding Claims, wherein mixing the mineral slurry with aqueous foam is carried out with a static mixer.

9. The method according to any one of the preceding Claims, wherein a liquid-phase accelerator is added to the slurry of mineral foam before filling the cavity.

10. The method according to any one of the preceding Claims, wherein the amount of calcium sulfoaluminate cement is 22-60wt%, especially 25-40wt%.

11. The method according to any one of the preceding Claims, wherein the amount of Ordinary Portland Cement is 30-70wt%, especially 35-65wt%.

12. The method according to any one of the preceding Claims, wherein the amount of the source of calcium sulfate is 5-15wt%, especially 7-12wt%.

13. The method according to any one of the preceding Claims, wherein the composition comprising a hydraulic binder consists of said hydraulic binder and optionally of additives.

14. The method according to any one of the preceding Claims, wherein the ratio R between the volume, respectively volumetric flow rate, of aqueous foam and the volume, respectively volumetric flow rate, of mineral slurry is 7 to 20, especially 10 to 18.

15. A construction element obtainable by the method of any one of the preceding Claims.
